# EUROPEAN PATENT APPLICATION

(11) **EP 3 654 496 A1**
(43) Date of publication of application: **20.05.2020**
(21) Application number: 18832471.9
(22) Date of filing: 21.06.2018
(51) Int. Cl.: H02K 3/34, F04D 5/00, F04D 29/60, H02K 15/095, H02K 15/12

(54) **STATOR, FUEL PUMP UNIT, AND FUEL PUMP UNIT MANUFACTURING METHOD**

(30) Priority: 10.07.2017 JP 2017134782
(71) Applicant: Mitsuba Corporation, Kiryu-shi, Gunma 376-8555 (JP)
(72) Inventor: TAKEUCHI Naoki, Kiryu-shi Gunma 376-8555 (JP)
(74) Representative: Cabinet Laurent & Charras
(86) International application number: PCT/JP2018/023642
(87) International publication number: WO 2019/012944

(57) **Abstract**

A stator core (81) having a back yoke (97), a plurality of teeth (99) that are formed side by side in a circumferential direction of the back yoke (97), and a plurality of stator slots (93) formed between the plurality of teeth (99) adjacent in the circumferential direction (θ); an insulator (83) that covers end surfaces of the plurality of teeth (99) in an axial direction (Z) and inner circumferential surfaces of the plurality of stator slots (93); and a plurality of windings (85) that are wound between predetermined stator slots (93) via the insulator (83) are provided, and protrusion parts (115) that bend and extend from both end sides of flange parts (103) of the teeth (99) in the circumferential direction (θ) toward the back yoke (97) side are provided in the insulator (83).

## Description

### [Technical Field]

The present invention relates to a stator, a fuel pump unit, and a method for manufacturing a fuel pump unit.

Priority is claimed on Japanese Patent Application No. 2017-134782, filed July 10, 2017, the content of which is incorporated herein by reference.

### [Background Art]

An inner rotor type brushless motor is used to drive a pump in a fuel pump unit that is used for, for example, a motorcycle among fuel pump units that pressure-feed fuel as a fluid to an internal combustion engine using a pump. The inner rotor type brushless motor includes a rotor at the center of a stator in a radial direction that can rotate with respect to the stator.

In addition, when the pump is driven using the brushless motor, a fluid transported from the pump passes through the inside of the brushless motor, particularly, between the stator and the rotor in the axial direction. As a stator to be used in such a brushless motor, for example, there is a stator disclosed in Patent Literature 1.

The stator disclosed in Patent Literature 1 includes a ring-like stator core, a plurality of slots, a plurality of flow paths, an insulator, a plurality of windings, and a resin material. The plurality of slots are provided to be separated from each other in the circumferential direction of the end surface of the stator core. The plurality of flow paths allows a fluid to pass therethrough in the axial direction. The plurality of flow paths are formed to connect the plurality slots to the central hole of the stator core. The insulator covers the inner circumferential surfaces of the plurality of slots and the gaps between the adjacent slots on the end surface of the stator core. The plurality of windings are assembled into the slots via the insulator and disposed in adjacent slots. The plurality of slots are filled with the resin material.

Before the plurality of slots are filled with the resin material, first, a mold is disposed in the spaces connecting the plurality of slots and the central hole of the stator core. Next, a molten resin is injected into the plurality of slots and solidified and then made into a resin material. Finally, the mold is removed from the stator core. Accordingly, the slots are filled with the resin material and the spaces in which the mold was disposed turn into flow paths.

### [Citation List]

### [Patent Literature]

### [Patent Literature 1]

Japanese Patent No. 4696855

### [Summary of Invention]

### [Technical Problem]

However, with respect to the stator described in Patent Literature 1, if the mold is disposed in the slots before the slots are filled with the resin material, there is concern of the mold coming in contact with the windings in the slots and damaging the windings. Thus, it may not be possible to set flow paths in the slots. Thus, in a case where the stator is miniaturized, it is hard to secure a sufficient sectional area of the flow paths and to allow a sufficient amount of fuel to pass therethrough.

The present invention aims to provide a stator, a fuel pump unit, and a method for manufacturing a fuel pump unit that can allow a sufficient amount of fluid to pass therethrough even in a case where the stator is miniaturized.

### [Solution to Problem]

According to a first aspect of the present invention, a stator includes a stator core having a back yoke, a plurality of teeth that are formed side by side in a circumferential direction of the back yoke, and a plurality of slots formed between the plurality of teeth adjacent to each other in the circumferential direction; an insulator that covers end surfaces of the plurality of teeth in an axial direction and side surfaces of the plurality of slots facing a direction other than the axial direction; and a plurality of windings that are wound between the predetermined slots via the insulator, in which each of the teeth has a tooth body that protrudes from the back yoke in a radial direction, and a flange part that extends in the circumferential direction from a tip of the tooth body at the side opposite to the back yoke, and protrusion parts that bend and extend from both end sides of the flange part in the circumferential direction toward the back yoke side are provided in the insulator.

As described above, the protrusion parts bend and extend from both end sides of the flange part of the teeth in the circumferential direction toward the back yoke side in the insulator. In this way, the windings in the vicinity between the flange parts that are adjacent in the circumferential direction are covered by the protrusion parts in the slots in which the windings are wound. Thus, for example, in a fuel pump unit employing an inner rotor type brushless motor, even in a case where flow paths are formed by connecting the central hole of a stator core, which is formed by disposing a rotor at the center of the stator core in a radial direction, and a plurality of slots, even if a mold is disposed in the spaces serving as the flow paths, it is possible to prevent the mold from coming in contact with windings in the slots. As a result, the flow paths can be set in the slots. Therefore, a sufficient sectional area of the flow paths can be secured and a sufficient amount of fluid can pass therethrough even in a case where the stator is miniaturized.

According to a second aspect of the present invention, a fuel pump unit includes the stator according to the first aspect of the present invention; a resin material that is filled in the slots; a rotor that is rotatable around a rotational axis line with respect to the stator; and a pump that is driven by receiving rotation of the rotor and transports fuel along the rotational axis line, wherein a plurality of flow paths that communicate from a side surface of the flange part in the radial direction to an end part of the protrusion part on the back yoke side and penetrate the resin material in the rotational axis line direction to allow the fuel to pass through are formed.

With this configuration, even when the flow paths are set in the slots, it is possible to prevent the windings of the stator from being damaged with the flange parts of the insulator. Therefore, a sufficient sectional area of the flow paths can be secured and a sufficient amount of fluid can pass therethrough even in a caser where the stator is miniaturized.

According to a third aspect of the present invention, in the fuel pump unit according to the second aspect of the present invention, radially outer ends of the plurality of flow paths are positioned at the same positions of the tips of the protrusion parts on the back yoke side in the circumferential direction.

With this configuration, a sufficient sectional area of the flow paths can be secured even in a case where the stator is miniaturized. Therefore, even in the case where the stator of the present invention is miniaturized, a sufficient amount of fluid can pass therethrough.

According to a fourth aspect of the present invention, a method for manufacturing a fuel pump unit is a method for manufacturing the fuel pump unit according to the second or the third aspect of the present invention, and the method includes an insulator assembling process in which the end surfaces of the plurality of teeth in the axial direction and the side surfaces of the plurality of slots are covered with the insulator and the insulator is assembled into the stator core; a winding assembling process in which the plurality of windings are wound between the predetermined slots via the insulator; a mold disposition process in which a mold is inserted between the protrusion parts facing in the circumferential direction along the rotational axis line; a resin material filling process in which a resin material is filled into the plurality of slots after the mold disposition process; and a mold removal process in which the mold is removed from the stator core after the resin material filling process.

Accordingly, in the mold disposition process, the mold is surrounded by the protrusion parts of the insulator when the mold is disposed in the spaces serving as the flow paths. Thus, there is no concern of the mold coming in contact with the windings in the slots. As a result, the flow paths can be set in the slots. Thus, a sufficient sectional area of the flow paths can be secured even in a case where the stator is miniaturized. Therefore, the method for manufacturing the stator of the present invention can allow a sufficient amount of fluid to pass therethrough even in a case where the stator is miniaturized.

### [Advantageous Effects of Invention]

A stator, a fuel pump unit, and a method for manufacturing a fuel pump unit of the present invention can allow a sufficient amount of fluid to pass therethrough even in a case where the stator is miniaturized.

### [Brief Description of Drawings]

Fig. 1 is a plan view of a fuel pump unit according to an embodiment of the present invention.
Fig. 2 is a cross sectional view taken along the line A-A of Fig. 1.
Fig. 3 is a cross sectional view taken along the line B-B of Fig. 2.
Fig. 4 is a cross sectional view taken in the radial direction in a state in which an insulator is assembled into a stator core according to the embodiment.
Fig. 5 is a view showing a state in which windings are assembled into the stator core from the state of Fig. 4.
Fig. 6 is a view showing a state in which a mold is disposed in the stator core from the state of Fig. 5.
Fig. 7 is a view showing a state in which the stator core is filled with a resin material from the state of Fig. 6.
Fig. 8 is a view showing a state in which the mold is removed from the state of Fig. 7.

### [Description of Embodiments]

Next, an embodiment of the present invention will be described with reference to the drawings.

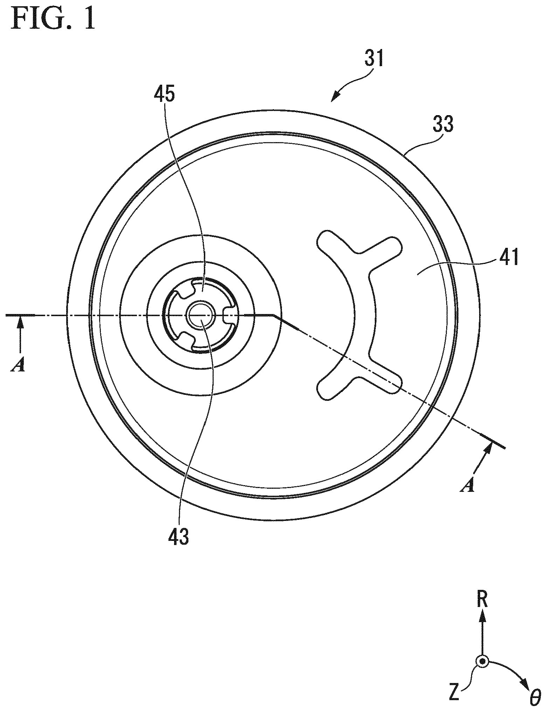

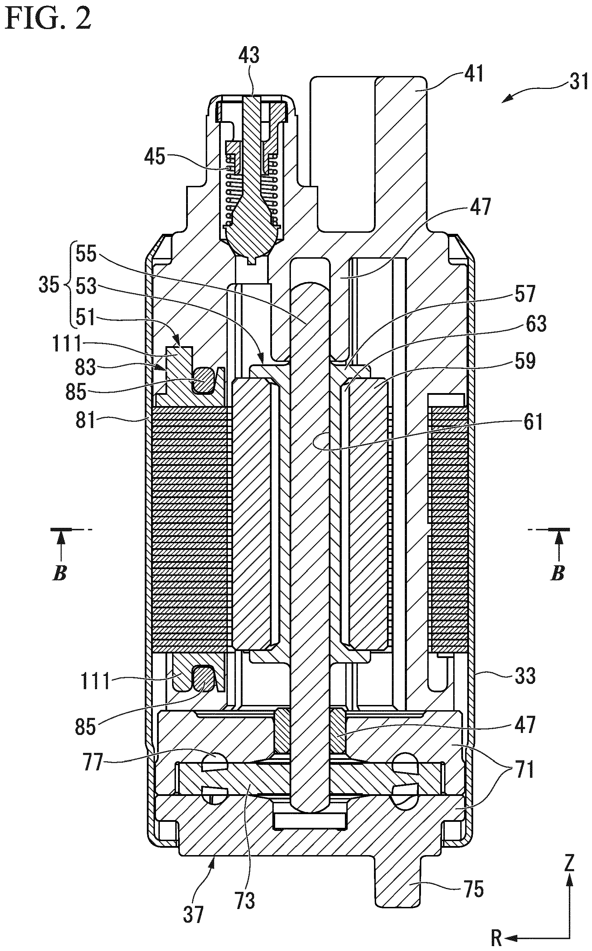

Fig. 1 is a plan view of a fuel pump unit 31. Fig. 2 is a cross sectional view taken along the line A-A of Fig. 1.

The fuel pump unit 31 is provided in, for example, a motorcycle and is used in a fuel supply device that pressure-feeds fuel (fluid) to an internal combustion engine which is not illustrated.

The fuel pump unit 31 includes a housing 33, a brushless motor 35, and the fuel pump 37 as illustrated in Figs. 1 and 2.

The housing 33 is formed in a cylindrical shape that is long in an axial direction Z. The upper surface and the bottom surface of the housing 33 are open. An end cover 41 is mounted at the upper side of the housing 33. The end cover 41 is formed of a resin. A discharge part 43 for discharging fuel is provided at an upper part of the end cover 41. The discharge part 43 is connected to the above-described fuel supply path. A check valve 45 is mounted inside the discharge part 43. The check valve 45 prevents reflux of fuel discharged from the discharge part 43 to the fuel supply path. A bearing 47 is formed at a lower part of the center part of the end cover 41.

The brushless motor 35 is disposed below the end cover 41 in the housing 33. The brushless motor 35 is a so-called inner rotor type motor having a stator 51 of the present embodiment, a rotor 53 rotatably provided in an inner side of the stator 51 in a radial direction R thereof, and a shaft 55.

The stator 51 is formed in a ring shape. The stator 51 is mounted on an inner circumferential surface of the housing 33. A detailed configuration of the stator 51 will be described below.

The rotor 53 is disposed on the inner circumferential side of the stator 51. The rotor 53 is driven to rotate around a rotational axis line C inside the stator 51. Note that the rotational axis line C is parallel with the axial direction Z.

The rotor 53 includes a rotor core 57 and a plurality of magnets 59. The rotor core 57 is formed in a ring shape. The rotor core 57 is formed by stacking a plurality of electromagnetic steel sheets in the axial direction Z. A through hole 61 is formed to penetrate the central part of the end surfaces (upper and bottom surfaces) of the rotor core 57 in the axial direction Z.

A plurality of rotor slots 63 are formed on the outer circumferential surface of the rotor core 57 side by side in a circumferential direction θ having predetermined intervals. The plurality of magnets 59 are mounted in the plurality of rotor slots 63. The shaft 55 outputs rotation of the rotor 53 as a driving force. The shaft 55 is fixed to the through hole 61 of the rotor core 57, penetrating therethrough. The upper end part of the shaft 55 is rotatably supported by the above-described bearing 47.

The fuel pump 37 is disposed on a lower side inside the housing 33. The fuel pump 37 is disposed below the brushless motor 35. The fuel pump 37 includes a pump case 71 and an impeller 73 (rotary member). A fuel intake part 75 for taking in fuel is provided to protrude at a lower part of the pump case 71. The fuel intake part 75 is connected to, for example, a filer (not illustrated) of a fuel supply device.

Another bearing 47 is formed at an upper part inside the pump case 71. The bearing 47 rotatably supports a lower end part of the shaft 55. The impeller 73 is disposed lower than the bearing 47 in the pump case 71. The impeller 73 is mounted on the shaft 55 and rotates in the circumferential direction θ. A pump passage 77 through which fuel passes is formed between the pump case 71 and the impeller 73.

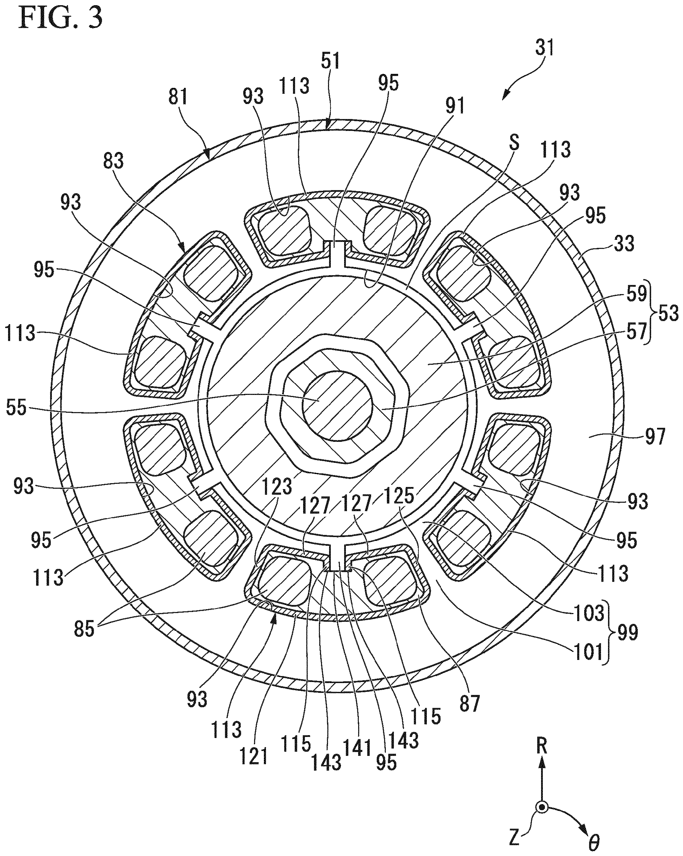

Fig. 3 is a cross sectional view taken along the line B-B of Fig. 2. The stator 51 includes a stator core 81, insulators 83, windings 85, and a resin material 87.

The stator core 81 is formed in a ring shape surrounding the rotor 53. A gap S is formed between the stator core 81 and the rotor 53. The gap S is formed to extend in the axial direction Z. The gap S allows fuel to pass therethrough in the axial direction Z. The stator core 81 is formed by stacking a plurality of electromagnetic steel sheets in the axial direction Z. A central hole 91 is provided at the central part of end surfaces of the stator core 81 (the upper and bottom surfaces in Fig. 2).

The central hole 91 is formed to extend in the axial direction Z. A plurality of stator slots 93 (slots) are provided on an end surface of the stator core 81. The plurality of stator slots 93 are provided in the circumferential direction θ of the stator core 81 having predetermined intervals. A plurality of flow paths 95 are formed on the inner circumferential side of the stator core 81. The plurality of flow paths 95 are formed to connect the central hole 91 of the stator core 81 and the plurality of stator slots 93. The plurality of flow paths 95 allow fuel to pass therethrough in the axial direction Z.

The stator core 81 has a cylindrical back yoke 97 and a plurality of teeth 99. The back yoke 97 constitutes the outer circumferential part of the stator core 81. The back yoke 97 is formed in a ring shape. The plurality of teeth 99 are disposed on the inner circumferential side of the back yoke 97 side by side in the circumferential direction θ having predetermined intervals. In addition, the plurality of teeth 99 are formed to protrude inward in the radial direction R from the inner circumferential side of the back yoke 97. Each of the teeth 99 includes a tooth body 101 and a flange part 103.

Each tooth body 101 is formed to protrude inward in the radial direction R from the inner circumferential side of the back yoke 97. That is, each of the stator slots 93 is formed between the tooth bodies 101 adjacent in the circumferential direction θ Each flange part 103 is formed to be integrated with the tip of its tooth body 101. The flange part 103 is formed to extend to both sides of the circumferential direction θ. The flange part 103 constitutes the part between adjacent flow paths 95 and 95.

Each insulator 83 is an insulating material formed of a resin. The insulator 83 is mounted to be fitted into the stator core 81 while covering the inner circumferential surfaces of the plurality of stator slots 93 (inner side surfaces facing in a direction other than the axial direction Z) and the gaps between adjacent stator slots 93 and 93 on the end surface of the stator core 81 in the axial direction Z. The insulator 83 includes a plurality of inter-slot cover parts 111 (see Fig. 2), a plurality of slot cover parts 113, and a plurality of protrusion parts 115 and 115. The inter-slot cover parts 111 cover the gaps between the stator slots 93 and 93. The slot cover parts 113 cover the inner circumferential surfaces of the stator slots 93. The slot cover parts 113 are combined with the inter-slot cover parts 111 in the circumferential direction θ.

Each slot cover part 113 includes a radially outer part 121, a one-circumferential-side part 123, an other-circumferential-side part 125, and radially inner parts 127 and 127. The radially outer part 121 covers the radially outer part of the inner circumferential surface of each stator slot 93. The one-circumferential-side part 123 covers one circumferential side part of the inner circumferential surface of the stator slots 93. A radially outer end of the one-circumferential-side part 123 is combined with the radially outer part 121. The other-circumferential-side part 125 covers the other circumferential side part of the inner circumferential surface of the stator slot 93. A radially outer end of the other-circumferential-side part 125 is combined with the radially outer part 121. The radially inner parts 127 and 127 cover radially inner parts of the inner circumferential surface of the stator slot 93. A flow path 95 is disposed between the radially inner parts 127 and 127.

The protrusion parts 115 and 115 are provided on the flow path 95 side of the radially inner parts 127 and 127 of the slot cover part 113 (on both end sides of the flange parts 103 in the circumferential direction θ) to protrude outward in the radial direction R (to the back yoke 97 side). The windings 85 are wound between the stator slots 93 and 93 (the tooth bodies 101) via the inter-slot cover parts 111 of the insulator 83. The windings 85 are disposed in the adjacent stator slots 93 and 93 while being wound between the stator slots 93 and 93. The windings 85 are disposed closer to the tooth bodies 101 than to the protrusion parts 115. The windings 85 are connected to an external control device via the above-described harness.

A control device controls current application to the windings 85 in accordance with rotation positions of the rotor 53. Accordingly, the rotor 53 is driven to rotate, the shaft 55 thereby rotates, and thereby the impeller 73 of the fuel pump 37 rotates.

Each of the stator slots 93 is filled with the resin material 87. Specifically, the space surrounded by the insulator 83 in each of the stator slots 93 is filled with the resin material 87. The resin material 87 covers the windings 85 and 85 that are adjacent in the circumferential direction θ in each of the stator slots 93. Since the space surrounded by the insulator 83 in each of the stator slots 93 is filled with the resin material 87, a radially outer end 141 of the flow path 95 is placed at the same position as tips 143 of the protrusion parts 115 (outer ends thereof in the radial direction R) in the circumferential direction θ. In addition, the resin material 87 does not cover the inner circumferential surface of each of the flange parts 103 constituting the teeth 99. That is, the inner circumferential surfaces of the flange parts 103 are exposed in the state in which each of the stator slots 93 is filled with the resin material 87.

A method for supplying fuel to an internal combustion engine in the fuel pump unit 31 configured as described above will be described. When the rotor 53 of the brushless motor 35 is driven to rotate, the shaft 55 rotates. When the shaft 55 rotates, the impeller 73 of the fuel pump 37 rotates. Accordingly, the fuel retained in a fuel tank is filtered through a filter, which is not illustrated, and taken from the fuel intake part 75 into the pump case 71. The fuel taken into the pump case 71 is pressurized in the pump passage 77 and transported to the brushless motor 35. The fuel transported to the brushless motor 35 passes through the gap S between the stator core 81 and the rotor 53 and the plurality of flow paths 95 and is discharged from the discharge part 43 to a fuel supply path, which is not illustrated. The fuel discharged to the fuel supply path is transported to the internal combustion engine, which is not illustrated.

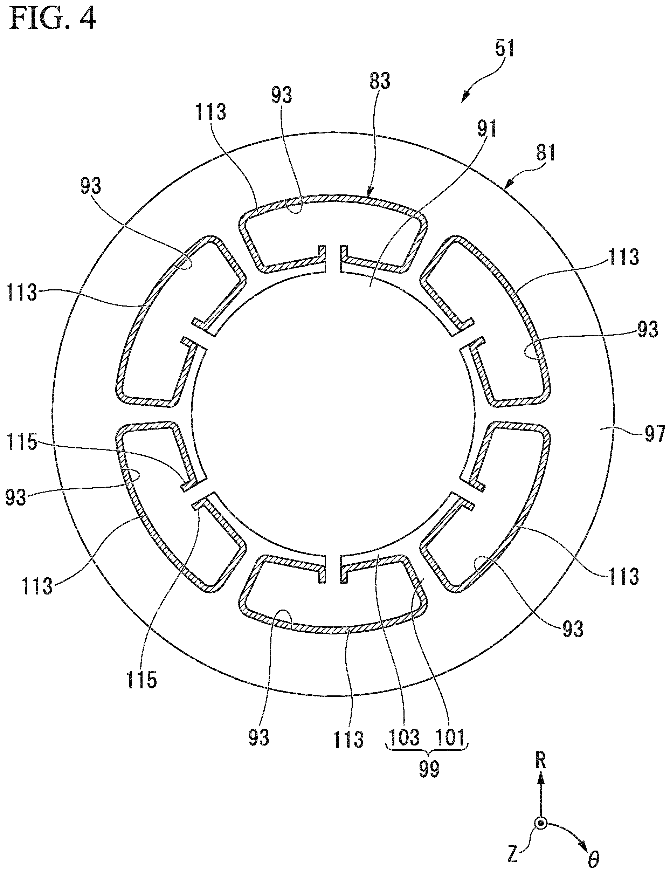

Next, a method for manufacturing the stator 51 of the present embodiment will be described using Fig. 4 to Fig. 8. The method for manufacturing the stator 51 of the present embodiment has the following five processes. Each of the processes will be described in order.
(1) Insulator assembling process
(2) Winding assembling process
(3) Mold disposition process
(4) Resin material filling process
(5) Mold removal process

### (1) Insulator assembling process

Fig. 4 is a cross sectional view taken in the radial direction R in a state in which the insulator 83 is assembled into the stator core 81. In the insulator assembling process, the insulator 83 is assembled to be fitted into the stator core 81 while covering the inner circumferential surfaces of the plurality of stator slots 93 of the stator core 81 and the gaps between the stator slots 93 and 93 as illustrated in Fig. 4.

### (2) Winding assembling process

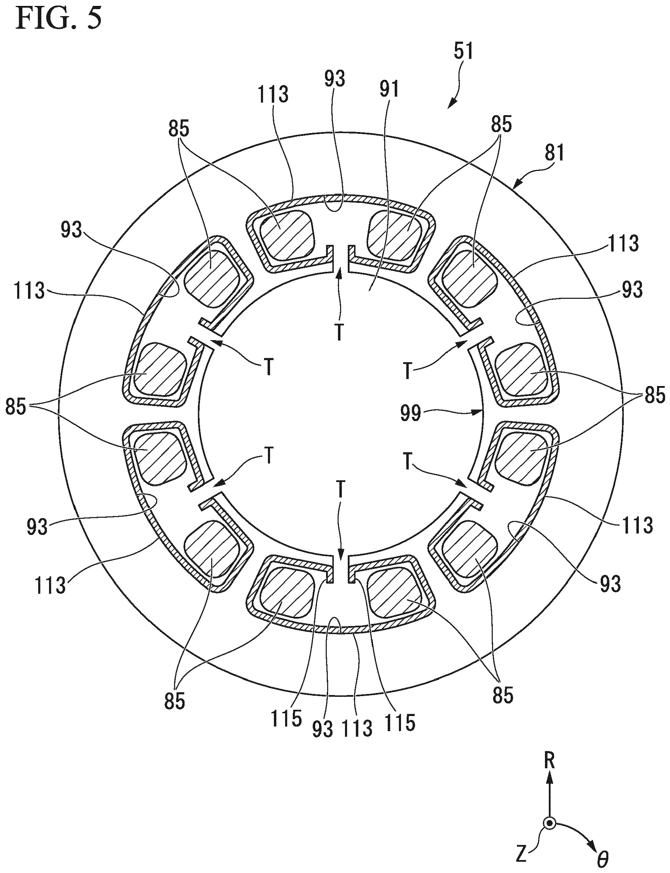

Fig. 5 is a view showing a state in which the windings 85 are assembled into the stator core 81 from the state of Fig. 4. In the winding assembling process, the windings 85 are wound and assembled between the stator slots 93 and 93 via the insulator 83, and thus disposed in the adjacent stator slots 93 and 93 as illustrated in Fig. 4 and Fig. 5.

### (3) Mold disposition process

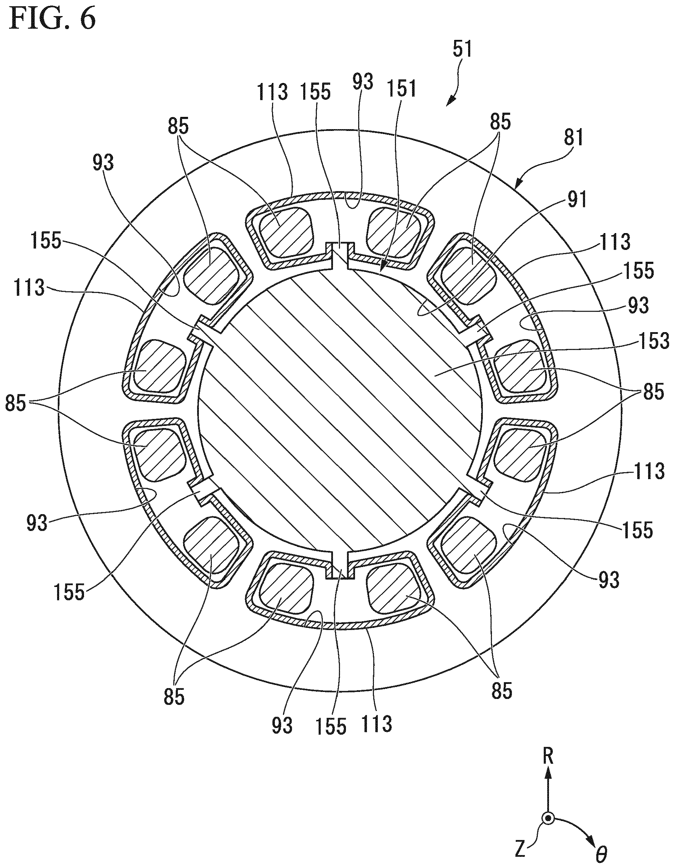

Fig. 6 is a view showing a state in which a mold 151 is disposed in the stator core 81 from the state of Fig. 5. In the mold disposition process, the mold 151 is disposed by being inserted into the central hole 91 of the stator core 81 and a plurality of spaces T (see Fig. 5) connecting the central hole 91 and the plurality of stator slots 93 in the axial direction Z as illustrated in Fig. 5 and Fig. 6. The plurality of spaces T serve as the plurality of flow paths 95 when the stator 51 is completed. The mold 151 includes a mold body 153 and a plurality of projections 155. The mold body 153 is formed in a cylindrical shape. The mold body 153 is disposed in the central hole 91 of the stator core 81.

The plurality of projections 155 are formed at positions (spaces T) corresponding to the stator slots 93 between the flange part 103 of the teeth 99 that are on an outer circumferential surface of the mold body 153 and adjacent in the circumferential direction θ so as to be inserted into the stator slots 93 and protrude. In addition, the projections 155 are formed to be inserted into the entire gap between the protrusion parts 115 of the insulator 83 facing in the circumferential direction θ. In other words, radially outward ends 155a of the plurality of projections 155 of the mold 151 and the tips 143 of the protrusion parts 115 form one face in the radial direction R.

### (4) Resin material filling process

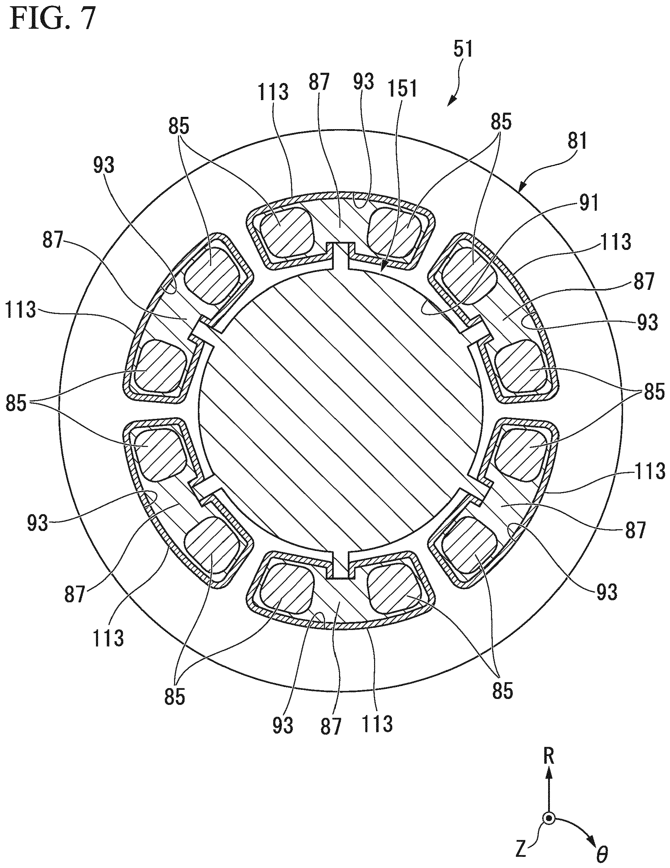

Fig. 7 is a view showing a state in which the stator core 81 is filled with the resin material 87 from the state of Fig. 6. In the resin material filling process, a molten resin is injected into the plurality of stator slots 93 with the projections 155 of the mold 151 disposed in the spaces T as illustrated in Fig. 6 and Fig. 7. Then, the resin is cooled and solidified to form the resin material 87. Accordingly, the plurality of stator slots 93 are filled with the resin material 87.

### (5) Mold removal process

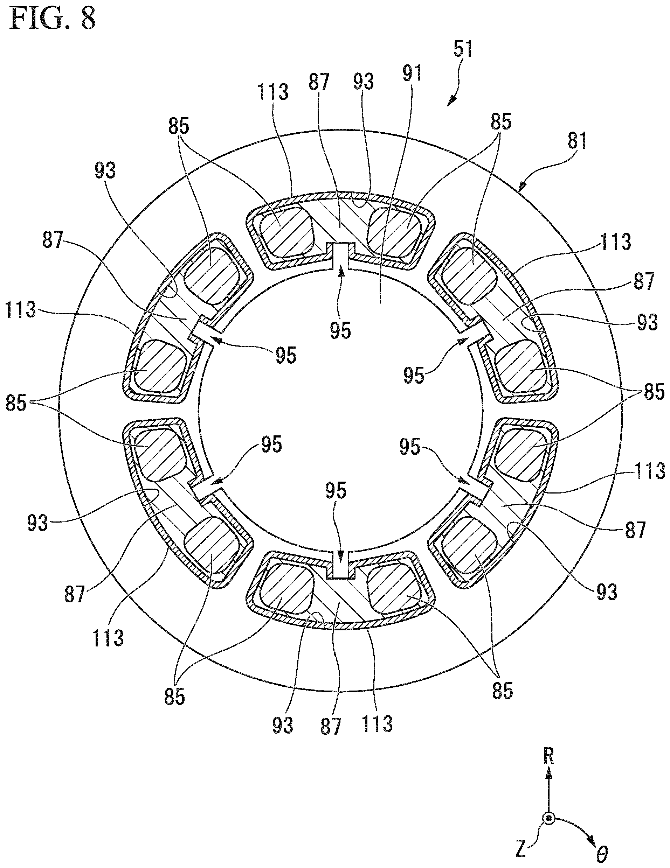

Fig. 8 is a cross sectional view showing a state in which the mold 151 is removed from the state of Fig. 7. In the mold removal process, the mold 151 is removed from the stator core 81 with the plurality of stator slots 93 filled with the resin material 87 as illustrated in Fig. 7 and Fig. 8. Accordingly, the plurality of spaces T in which the plurality of projections 155 of the mold 151 are disposed turn into the plurality of flow paths 95.

Next, an effect of the stator 51 of the present embodiment will be described.

The stator 51 of the present embodiment is a stator to be used in the brushless motor 35 that drives the fuel pump 37 and causes fuel delivered from the fuel pump 37 to pass through in the axial direction Z. The stator 51 of the present embodiment includes the ring-like stator core 81, and the plurality of stator slots 93 provided on the end surface of the stator core 81 to be separated in the circumferential direction θ. Furthermore, the stator 51 of the present invention includes a plurality of flow paths 95 that are formed to connect the plurality of stator slots 93 and the central hole 91 of the stator core 81 and allow fuel to pass therethrough in the axial direction Z, and the insulator 83 that covers the inner circumferential surfaces of the plurality of stator slots 93 and the gaps between the stator slots 93 and 93 adjacent on the end surface of the stator core 81. Furthermore, the stator 51 of the present embodiment includes the plurality of windings 85 that are wound between adjacent the stator slots 93 and 93 via the insulator 83, and the resin material 87 that is filled in the plurality of stator slots 93. The protrusion parts 115 that protrudes outward in the radial direction R are provided in the insulator 83 on the flow path 95 side of the radially inner parts 127 and 127 of the slot cover part 113 covering the inner circumferential surface of each stator slot 93 (on the both end sides of the flange parts 103 in the circumferential direction θ).

Accordingly, before the plurality of stator slots 93 is filled with the resin material 87, the mold 151 is disposed in the spaces T that connects the plurality of stator slots 93 which serves as the flow paths 95 and the central hole 91 of the stator core 81. At this time, the mold 151 is surrounded by the protrusion parts 115 of the insulator 83. In other words, the windings 85 in the vicinity between the flange parts 103 that are adjacent in the circumferential direction θ are covered by the protrusion parts 115 in the stator slots 93. Thus, it is possible to prevent the mold 151 from coming in contact with the windings 85 in the stator slots 93, and to set the flow paths 95 in the stator slots 93. Thus, even in a case where the stator 51 (the brushless motor 35) is miniaturized, a sufficient sectional area of the flow paths 95 can be secured. Therefore, the stator 51 of the present embodiment can allow a sufficient amount of fuel to pass therethrough even in a case where it is miniaturized.

Moreover, in the stator 51 of the present embodiment, the radially outer ends 141 of the plurality of flow paths 95 are positioned at the same position as those of the tips 143 of the protrusion parts 115 in the circumferential direction θ. Accordingly, even in a case where the stator 51 is miniaturized, a more sufficient sectional area of the flow paths 95 can be secure. Thus, the stator 51 of the present embodiment can allow a more sufficient amount of fuel to pass therethrough even in the case where it is miniaturized.

In addition, a method for manufacturing the stator 51 of the present embodiment includes the insulator assembling process. In the insulator assembling process, the insulator 83 is assembled into the stator core 81 by covering the inner circumferential surfaces of the plurality of stator slots 93 of the stator core 81 and the gap between the stator slots 93 and 93 with the insulator 83. The method for manufacturing the stator 51 of the present embodiment further includes the windings assembly process. In the windings assembling process, the windings 85 are wound between the stator slots 93 and 93 via the insulator 83. The method for manufacturing the stator 51 of the present embodiment further includes a mold disposition process and a resin material filling process. In the mold disposition process, the mold 151 is disposed between the protrusion parts 115 of the insulator 83 facing in the circumferential direction θ (the spaces T that will serve as the flow paths 95 connecting the plurality of stator slots 93 and the central hole 91 of the stator core 81). In the resin material filling process, the plurality of stator slots 93 are filled with the resin material 87 with the mold 151 disposed in the spaces T. The method for manufacturing the stator 51 of the present embodiment further includes the mold removal process. In the mold removal process, the mold 151 is removed from the stator core 81 with the plurality of stator slots 93 filled with the resin material 87.

Accordingly, in the mold disposition process, since the mold 151 is surrounded by the protrusion parts 115 of the insulator 83 when the mold 151 is disposed in the spaces T, there is no concern of the mold 151 being in contact with the windings 85 in the stator slots 93. Thus, the flow paths 95 can be set in the stator slots 93. Hence, even in the case where the stator 51 is miniaturized, a sufficient sectional area of the flow paths 95 can be secured. Therefore, using the method for manufacturing the stator 51 of the present embodiment, a sufficient amount of fluid can pass through the stator 51 even in the case where the stator 51 is miniaturized.

Although the embodiment of the present invention has been described above in detail with reference to the drawings, a specific configuration is not limited thereto, and modifications in design not departing from the gist of the present invention are included therein.

The case of the stator 5 lof the present embodiment where the radially outer ends 141 of the plurality of flow paths 95 are positioned at the same positions as those of the tips 143 of the protrusion parts 115 in the circumferential direction θ in each stator slot 93 has been described. However, the invention is not limited thereto, and the radially outer ends 141 may be formed to be positioned inward the tips 143 of the protrusion part 115 in the radial direction R in 51 in the stator.

The stator 51 of the present embodiment is used in the fuel pump unit 31 that is used in, for example, a fuel supply device (not illustrated) provided in a motorcycle. However, the invention is not limited thereto, and the stator 51 can be used in various applications. Although the case where fluid is fuel for vehicles has been described in the present embodiment, the invention is not limited thereto, and the invention can be applied also to water, air, hydraulic oil of a hydraulic circuit, and the like.

The case where brushless motor 35 of the present embodiment is a so-called inner rotor type motor having the stator 51, the rotor 53 that is rotatably provided on an inner side of the stator 51 in the radial direction R, and the shaft 55 has been described. In addition, the case where the stator core 81 of the stator 51 has the cylindrical back yoke 97, and the teeth 99 protruding inward in the radial direction R from the inner circumferential side of the back yoke 97 has been described. However, the invention is not limited thereto, and the configuration of the stator 51 of the present embodiment can also be applied to a so-called outer rotor type brushless motor in which the rotor is disposed at the outer circumferential part of the stator. That is, the configuration of the stator 51 of the present embodiment can also be applied to the stator having teeth radially protruding outward the back yoke in the radial direction.

### [Industrial Applicability]

Using the above-described stator, fuel pump unit, and fuel pump unit manufacturing method, a sufficient amount of fluid can be allowed to pass through the stator even in a case where it is miniaturized.

### [Reference Signs List]

- 31: Fuel pump unit
- 35: Brushless motor
- 37: Fuel pump (pump)
- 51: Stator
- 53: Rotor
- 81: Stator core
- 83: Insulator
- 85: Winding
- 87: Resin material
- 91: Central hole
- 93: Stator slot (slot)
- 95: Flow path
- 97: Back yoke
- 99: Teeth
- 101: Teeth body
- 103: Flange part
- 113: Slot cover part
- 115: Protrusion part
- 127: Radially inner part
- 141: Radially outer end
- 143: Tip
- C: Rotational axis line
- Z: Axial direction (rotational axis line direction)
- R: Radial direction
- θ: Circumferential direction

## Claims

1. A stator comprising:
a stator core having a back yoke, a plurality of teeth that are formed side by side in a circumferential direction of the back yoke, and a plurality of slots formed between the plurality of teeth adjacent to each other in the circumferential direction;
an insulator that covers end surfaces of the plurality of teeth in an axial direction and side surfaces of the plurality of slots facing a direction other than the axial direction; and
a plurality of windings that are wound between the predetermined slots via the insulator,
wherein each of the teeth has a tooth body that protrudes from the back yoke in a radial direction, and a flange part that extends in the circumferential direction from a tip of the tooth body at the side opposite to the back yoke, and
wherein protrusion parts that bend and extend from both end sides of the flange part in the circumferential direction toward the back yoke side are provided in the insulator.

2. A fuel pump unit comprising:
the stator according to claim 1;
a resin material that is filled in the slots;
a rotor that is rotatable around a rotational axis line with respect to the stator; and
a pump that is driven by receiving rotation of the rotor and transports fuel along the rotational axis line,
wherein a plurality of flow paths that communicate from a side surface of the flange part in the radial direction to an end part of the protrusion part on the back yoke side and penetrate the resin material in the rotational axis line direction to allow the fuel to pass through are formed.

3. The fuel pump unit according to claim 2, wherein radially outer ends of the plurality of flow paths are positioned at the same positions of the tips of the protrusion parts on the back yoke side in the circumferential direction.

4. A method for manufacturing the fuel pump unit according to claim 2 or claim 3, the method comprising:
an insulator assembling process in which the end surfaces of the plurality of teeth in the axial direction and the side surfaces of the plurality of slots are covered with the insulator and the insulator is assembled into the stator core;
a winding assembling process in which the plurality of windings are wound between the predetermined slots via the insulator;
a mold disposition process in which a mold is inserted between the protrusion parts facing in the circumferential direction along the rotational axis line;
a resin material filling process in which a resin material is filled into the plurality of slots after the mold disposition process; and
a mold removal process in which the mold is removed from the stator core after the resin material filling process.
